# EUROPÄISCHE PATENTSCHRIFT

(11) **EP 0 656 173 B1**
(45) Veröffentlichungstag und Bekanntmachung des Hinweises auf die Patenterteilung: **12.08.1998**
(21) Anmeldenummer: 94890202.8
(22) Anmeldetag: 05.12.1994
(51) Int. Cl.: A01J 25/16, A23C 19/14

(54) **Verfahren zum Trocknen von Käse sowie Vorrichtung zur Duchführung dieses Verfahrens**
Process for drying cheeses and device for carrying out this process
Procédé de séchage de fromages et dispositif pour la mise en oeuvre de ce procédé

(30) Priorität: 03.12.1993 AT 2455/93
(43) Veröffentlichungstag der Anmeldung: 07.06.1995
(73) Patentinhaber: SOLICH GESELLSCHAFT m.b.H, A-1140 Wien (AT)
(72) Erfinder: Solich, Karl, A-1140 Wien (AT)
(74) Vertreter: Haffner, Thomas M., Dr.

(56) Entgegenhaltungen:
- FR-A- 1 151 195
- FR-A- 2 295 694
- US-A- 1 445 785

## Beschreibung

Die Erfindung bezieht sich auf ein Verfahren zum Trocknen von Käse mit Luft sowie auf eine Vorrichtung zur Durchführung dieses Verfahrens.

Käse wird üblicherweise nach der Herstellung selten im Ganzen verkauft oder zum Verkaufen bereitgestellt. Der überwiegende Teil des in den Verkehr gesetzten Käses wird in Kleinverpackungen abgegeben, wobei in der Regel Vakuumkleinverpackungen gewählt werden. Je nach Restfeuchtigkeit des auf diese Weise verpackten Produktes kommt es aber nach relativ kurzer Zeit bereits zu Schimmelbefall. Insbesondere ist die verbleibende Feuchtigkeit wesentlich für den möglichen Befall mit Bakterien. Eine intensive und weitestgehende Trocknung führt aber zu relativ großem Gewichtsverlust, wobei bei rascher, intensiver Trocknung im wesentlichen nur eine äußerliche Trocknung erreicht wird.

Für die Trocknung von Käse ist es bisher üblich, Käse in Regalen zu trocknen, wofür platzraubende Zwischenlager erforderlich sind. Die Trocknung erfolgt in feuchtigkeitskonditionierten Räumen, und es ist in der Regel eine arbeitsaufwendige händische Umlagerung erforderlich. Die Trocknung im Warmluftstrom, wie sie gleichfalls vereinzelt angewandt wird, ist energieaufwendig und ist überaus keimbildungsanfällig. Üblicherweise werden im Salzbad gewaschene Käselaibe zur Trocknung zwischengelagert und anschließend aufgeschnitten und vakuumverpackt. Restfeuchte kondensiert auch nach dem Verpacken, sodaß Mikroorganismen vor allen Dingen an den Auflagestellen sich so weit vermehren können, daß geschmackliche Veränderungen am Endprodukt feststellbar sind. In großen Lagerräumen ist es in der Regel nicht möglich, gleiche Klimabedingungen an allen Stellen einzuhalten, sodaß unregelmäßige Trocknungsergebnisse und unterschiedliche hygienische Bedingungen erzielt werden.

Vor allen Dingen bei der Warmlufttrocknung ist die Vermehrung von unerwünschten Keimen problematisch. Bei hoher Lufttemperatur kann zwar das Keimwachstum gebremst werden, jedoch führt eine hohe Lufttemperatur zu stärkerer Austrocknung und damit zu einem Gewichtsverlust und unerwünschter Verhärtung des Käses. Zumeist ist bei hohen Lufttemperaturen für die Trocknung auch ein Geschmacksverlust nicht vermeidbar.

FR-A-1 151 195, was als nächstliegender Stand der Technik angesehen wird, zeigt ein Verfahren zum Trocknen von Käse mit Luft bei der der Käse mittels einer Fördereinrichtung durch einen offenen Trockentunnel gefahren wird.

Die Erfindung zielt nun darauf ab, ein Verfahren der eingangs genannten Art zu schaffen, mit welchem eine längere Haltbarkeit nach dem Verpacken gewährleistet ist, und insbesondere eine Übertrocknung sowie Geschmacksverluste beim Trocknen zuverlässig vermieden werden, sowie ein Keimbefall weitestgehend ausgeschlossen werden kann. Zur Lösung dieser Aufgabe besteht das erfindungsgemäße Verfahren im wesentlichen darin, daß der Käse mittels einer Fördereinrichtung durch einen Trockentunnel gefahren wird, daß aus dem Trockentunnel Luft abgesaugt wird, wobei ein Unterdruck aufrechterhalten wird und daß die abgesaugte Luft getrocknet und unter Aufrechterhaltung des Unterdruckes dem Trockentunnel rückgeführt wird. Dadurch, daß ein geschlossener Trockentunnel vorgesehen ist, in welchem der zu trocknende Käse mittels einer Fördereinrichtung eingefahren werden kann, lassen sich klimatische Bedingungen konstant vorgeben, wobei die Trocknung durch die Aufrechterhaltung eines Unterdruckes beschleunigt wird. Durch den angewandten Unterdruck kann Wasser leichter verdunsten, und es wird ohne erhöhte Temperatur, und im besonderen bei Raumtemperatur oder geringfügig unter der Raumtemperatur liegenden Temperaturen, bereits ein hervorragender Trocknungseffekt durch die Evakuierung erzielt. Gleichzeitig wird mit einem derartigen Trockentunnel aber auch den Bedingungen für eine bessere Hygiene Rechnung getragen. Während in großen Lagerhallen insgesamt die Tendenz der Keimbildung naturgemäß ständig zunimmt, kann bei der erfindungsgemäßen Verfahrensweise die aus dem Trockentunnel abgesaugte Luft nicht nur entfeuchtet werden, sonders auch wiederum sterilisiert bzw. keimfrei gemacht werden, bevor sie unter Aufrechterhaltung des Unterdruckes dem Trockentunnel wieder rückgeführt werden kann.

Die erfindungsgemäße Vorrichtung durch Durchführung dieses Verfahrens ist im wesentlichen gekennzeichnet durch einen von einer Fördereinrichtung durchsetzten Trockentunnel mit einer dichtend abschließbaren Beschickungstüre, wobei die Türe quer zur Fördereinrichtung in einer Führung verschiebbar und in Förderrichtung dichtend an die Beschickungsöffnung anpreßbar ist, und wenigstens eine Saugleitung, welche an den Trockentunnel angeschlossen ist, eine Trocknungseinrichtung für die abgesaugte Luft und wenigstens eine Rückführungsleitung für die getrocknete Luft. Insgesamt kann eine derartige Einrichtung relativ klein gebaut werden, da ein besonders rasches Trocknen der Oberfläche auch bei niedrigen Temperaturen erzielt wird. Durch die quer zur Fördereinrichtung in einer Führung verschiebbare Beschickungstür wird eine einfache Öffnung und ein einfaches Schließen der Beschickungstüre gewährleistet, wobei eine derartige Bewegungsrichtung eine exakte Führung auch schwererer Beschickungstüren ermöglicht und in der Folge die Möglichkeit bietet, eine derartige Beschickungstüre dichtend an die Beschickungsöffnung des Trockentunnels anzupressen. Gegenüber einer Warmlufttrocknung lassen sich durch die Evakuierung zum Zwecke der rascheren Verdunstung von Feuchtigkeit bei Zimmertemperatur neben einer Energieersparnis auch ein umweltfreundlicher geschlossener Luftkreislauf realisieren, welcher eine ausgezeichnete Kontrolle und Stabilisierung unerwünschter Mikroorganismen gewährleistet. Insgsamt läßt sich mit einer derartigen Einrichtung eine Trocknung bei geringstem Gewichtsverlust vornehmen, wodurch sich in der Folge die Lagerfähigkeit durch Anreicherung des Fettanteiles in der Randschicht und damit eine Verringerung des Eindringens von Bakterien verbessert. Diese Anreicherung des Fettanteiles in der Randschicht wird durch die Aufrechterhaltung von gegen Raumtemperatur nicht erhöhter Temperatur und durch die Anwendung von Unterdruck begünstigt, wodurch sich wesentliche Vorteile gegenüber konventioneller Lufttrocknung und vor allen Dingen gegenüber einer Warmlufttrocknung ergeben. Ein weiterer Vorteil eines derartigen Trockentunnels besteht aber auch darin, daß eine besonders einfache Reinigung eines derartigen Tunnels in regelmäßigen Abständen möglich ist. Hiezu genügt es, über die Transportanlage einfach einen Reinigungswagen oder Reinigungsbürsten einzufahren, welche das Tunnelinnere entsprechend zu reinigen erlauben.

Fördereinrichtungen können im Prinzip von Förderbändern gebildet werden. Naturgemäß kann auch eine Hängebahn oder aber eine Mehrzahl von Beschickungswagen zum Einsatz gelangen. Im Falle einer Verwendung eines Förderbandes kann dafür Sorge getragen werden, daß auch die Auflagefläche sicher entwässert wird, wofür das Förderband beispielsweise über einen Exzenter in Vibrationen versetzt werden könnte. In jedem Falle ist es für die erfindungsgemäße Einrichtung wesentlich, daß die Fördereinrichung von einem Förderband oder einer Hängebahn gebildet ist, welche im Bereich der quer zur Fördereinrichtung verschiebbaren Türen unterbrochen und in Förderrichtung verschiebbar bzw. verschwenkbar ausgebildet ist, wobei mit Vorteil in einem Fördertunnel eine Mehrzahl von Kammern nebeneinander angeordnet sind, um einen vorgegebenen Trocknungszyklus jeweils optimal an das Produkt angepaßt einhalten zu können. So kann es beispiesweise für bestimmte Käsesorten vorteilhaft sein, abwechselnd mit höherem und geringerem Unterdruck und jeweils entwässerter und entkeimter Trocknungsluft zu arbeiten, was insgesamt mit einem derartigen Trockentunnel ohne weiteres realisierbar ist.

Mit Vorteil ist der Trockentunnel als Röhre ausgebildet, wodurch sich auch eine besonders einfache Reinigung ergibt.

Wie bereits erwähnt, entspricht es einer bevorzugten Weiterbildung der erfindungsgemäßen Vorrichtung, daß der Trockentunnel in eine Mehrzahl von gesonderten Kammern in Förderrichtung unterteilt ist, welche durch quer zur Förderrichtung verschiebliche Trennwände dichtend voneinander getrennt sind und daß an die Kammern gesonderte Saug- und Rückführungsleitungen angeschlossen sind, wodurch unterschiedliche Trockenzyklen durch entsprechende Ventilsteuerungen ermöglicht werden.

Gemäß einer weiteren bevorzugten Ausführungsform ist die Ausbildung so getroffen, daß die Trocknungseinrichtung für das im Kreislauf geführte Gas als Kühleinrichtung zum Kondensieren der Feuchtigkeit und als Entkeimungseinrichtung ausgebildet ist, deren Wärmetauscher zum Vorwärmen des rückgeführten getrockneten und entkeimten Gases in die Rückführungsleitung eingeschaltet ist. Durch eine derartige vollständige Kreislaufführung ergibt sich eine besonders umweltfreundliche Betriebsweise, und es kann insbesondere Geruchsbelästigung ebenso ausgeschlossen werden, wie einem Anwachsen unerwünschter Bakterien wirkungsvoll begegnet werden kann.

Für Tockentunnel mit einer Mehrzahl gesonderter Kammern ist mit Vorteil die Ausbildung so getroffen, daß eine Saugpumpe zum Absaugen der feuchten Luft zyklisch mit einzelnen Kammern gesondert verbunden ist und daß die Saugpumpe sowie Absperrventile zwischen den Anschlüssen der Saugleitungen an den Kammern und der Saugpumpe in Abhängigkeit von Feuchtigkeitsmeßwerten in den einzelnen Kammern geschaltet ist, sodaß mit einer einzigen Saugpumpe das Auslangen gefunden werden kann, und sowohl das Rückströmen als auch das gezielte Absaugen aus einzelnen Kammern lediglich durch die Ventilsteuerung ausgelöst werden kann.

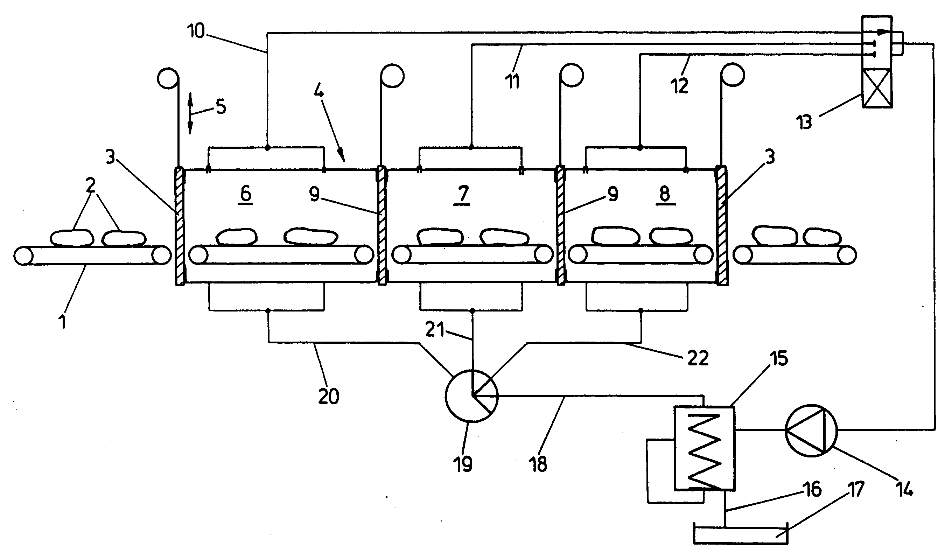

Die Erfindung wird nachfolgend anhand eines in der Zeichnung schematisch dargestellten Ausführungsbeispieles näher erläutert.

In der Zeichnung ist mit 1 ein Aufgabeförderband bezeichnet, mit welchem Käse 2 in Richtung einer Beschickungstüre 3 eines Trockentunnels 4 gefördert werden kann. Die Beschickungstüre 3 ist quer zur Förderrichtung im Sinne des Doppelpfeiles 5 verschiebbar und kann nach Absenken in Förderrichtung an die Eintrittsöffnung des Trockentunnels 4 angepreßt werden. Im Inneren des Trockentunnels 4 sind Kammern 6, 7 und 8 ausgebildet, welche jeweils durch in einer quer zur Förderrichtung verlaufenden Richtung verschieblich gelagerte Trennwandelemente 9 voneinander dichtend getrennt werden können. An jede der Kammern 6, 7 und 8 sind Saugleitungen 10, 11 und 12 angeschlossen, welche unter Zwischenschaltung eines Ventiles 13 mit einer Saugpumpe 14 verbunden sind. Je nach Ventilstellung des Ventiles 13 wird entweder über die Leitung 10, oder die Leitung 11, oder die Leitung 12 feuchte Luft aus den Kammern 6, 7 oder 8 abgesaugt und einem Entfeuchter 15 zugeführt. Im Entfeuchter erfolgt gleichzeitig eine Entkeimung der Luft, wobei das Kondensat über die Leitung 16 in einen Vorratsbehälter 17 ausgebracht wird. Die entfeuchtete und gegebenenfalls rückgewärmte Luft wird über die Rückführungsleitung 18 und ein Ventil 19 wiederum auf die Rückströmleitungen 20, 21 und 22 je nach Stellung des Ventiles 19 aufgeteilt, sodaß beim Absaugen von feuchter Luft aus einer Kammer immer durch entsprechend gezieltes Einströmen von entfeuchteter, getrockneter und entkeimter Luft der gewünschte Unterdruck in den einzelnen Kammern 6, 7 und 8 aufrecht erhalten werden kann.

Die Fördereinrichtung ist über die Länge des Trockentunnels 4 jeweils in Abschnitte unterteilt und besteht aus einer Mehrzahl von Förderbändern, welche jeweils im Bereich der quer zur Förderrichtung verschieblichen Trennwände bzw. der Beschikkungstüre oder aber der Türe am Ausgang des Trockentunnels 4 unterbrochen ist, um ein sicheres dichtes Abtrennen der Kammern voneinander bzw. ein dichtes Schließen des Trockentunnels zu ermöglichen.

Je nach Größe der nachgeschalteten Verpackungsstraße können mehrere Trockentunnel nebeneinander und in Serie geschaltet angeordnet sein. Das Trocknungsergebnis kann durch Druckwechsel und unterschiedliche Druckniveaus in den einzelnen Trockentunnels optimiert werden. Zur Schonung des zu trocknenden Gutes können in die Rückführungsleitungen Drosseln eingebaut sein und die Anschlüsse an die Kammern bzw. die Trockentunnel so ausgelegt werden, daß eine gleichmäßige Durchströmung jeder Kammer erzielt wird. Bei überaus geringem Platzbedarf kommen so beispielsweise 3 bis 10 t Käse/h in Abstimmung auf die Kapazität der Verpackungsstraße getrocknet werden.

## Patentansprüche

1. Verfahren zum Trocknen von Käse (2) mit Luft, wobei der Käse (2) mittels einer Fördereinrichtung durch einen Trockentunnel (4) gefahren wird, aus dem Trockentunnel (4) Luft abgesaugt wird, wobei ein Unterdruck aufrechterhalten wird und die abgesaugte Luft getrocknet und unter Aufrechterhaltung des Unterdruckes dem Trockentunnel (4) rückgeführt wird.

2. Vorrichtung zur Durchführung des Verfahrens nach Anspruch 1, gekennzeichnet durch einen von einer Fördereinrichtung durchsetzten Trockentunnel (4) mit einer dichtend abschließbaren Beschickungstüre (3), wobei die Türe (3) quer zur Fördereinrichtung in einer Führung verschiebbar und in Förderrichtung dichtend an die Beschickungsöffnung anpreßbar ist, und wenigstens eine Saugleitung (10, 11, 12), welche an den Trockentunnel (4) angeschlossen ist, eine Trocknungseinrichtung (15) für die abgesaugte Luft und wenigstens eine Rückführungsleitung (20, 21, 22) für die getrocknete Luft.

3. Vorrichtung nach Anspruch 2, dadurch gekennzeichnet, daß die Fördereinrichung von einem Förderband oder einer Hängebahn gebildet ist, welche im Bereich der quer zur Fördereinrichtung verschiebbaren Türen (9) unterbrochen und in Förderrichtung verschiebbar bzw. verschwenkbar ausgebildet ist.

4. Vorrichtung nach Anspruch 2 oder 3, dadurch gekennzeichnet, daß der Trockentunnel (4) als Röhre ausgebildet ist.

5. Vorrichtung nach Anspruch 2, 3 oder 4, dadurch gekennzeichnet, daß der Trockentunnel (4) in eine Mehrzahl von gesonderten Kammern (6, 7, 8) in Förderrichtung unterteilt ist, welche durch quer zur Förderrichtung verschiebliche Trennwände (9) oder Türen dichtend voneinander getrennt sind und daß an die Kammern (6, 7, 8) gesonderte Saug- (10, 11, 12) und Rückführungsleitungen (20, 21, 22) angeschlossen sind.

6. Vorrichtung nach einem der Ansprüche 2 bis 5, dadurch gekennzeichnet, daß die Trocknungseinrichtung (15) für das im Kreislauf geführte Gas als Kühleinrichtung zum Kondensieren der Feuchtigkeit und als Entkeimungseinrichtung ausgebildet ist, deren Wärmetauscher zum Vorwärmen des rückgeführten getrockneten und entkeimten Gases in die Rückführungsleitung (18) eingeschaltet ist.

7. Vorrichtung nach einem der Ansprüche 2 bis 6, dadurch gekennzeichnet, daß eine Saugpumpe (14) zum Absaugen der feuchten Luft zyklisch mit einzelnen Kammern (6, 7, 9) gesondert verbunden ist und daß die Saugpumpe (14) sowie Absperrventile (13) zwischen den Anschlüssen der Saugleitungen (10, 11, 12) an den Kammern (6, 7, 8) und der Saugpumpe (14) in Abhängigkeit von Feuchtigkeitsmeßwerten in den einzelnen Kammern (6, 7, 8) geschaltet ist.

## Claims

1. A process for drying cheeses (2) with air, wherein the cheeses (2) are conducted through a drying tunnel (4) by aid of a conveying means, air is sucked off the drying tunnel (4) while maintaining a negative pressure, and the sucked-off air is dried and returned to the drying tunnel (4) while maintaining the negative pressure.

2. A device for carrying out the process according to claim 1, characterized by a drying tunnel (4) through which a conveying means passes and which comprises a sealingly closeable charging door (3), which door (3) is displaceable transverse to the conveying means in a guiding means and sealingly pressable at the charging opening in the conveying direction, and at least one suction duct (10, 11, 12) connected to the drying tunnel (4), a drying means (15) for the sucked-off air and at least one return duct (20, 21, 22) for the dried air.

3. A device according to claim 2, characterized in that the conveying means is comprised of a belt conveyor or a suspension line, which is interrupted in the region of the doors (9) displaceable transverse to the conveying means and designed to be displaceable or pivotable in the conveying direction.

4. A device according to claim 2 or 3, characterized in that the drying tunnel (4) is designed as a tube.

5. A device according to claim 2, 3 or 4, characterized in that the drying tunnel (4) in the conveying direction is subdivided into a plurality of separate chambers (6, 7, 8) which are sealingly separated from one another by partition walls (9) or doors displaceable transverse to the conveying means, and that separate suction ducts (10, 11, 12) and return ducts (20, 21, 22) are connected to the chambers (6, 7, 8).

6. A device according to any one of claims 2 to 5, characterized in that the drying means (15) for the recirculated gas is designed as a cooling means for condensing moisture and as a degerminating means, whose heat exchanger is arranged in the return duct (18) for preheating the dried and degerminated gas returned.

7. A device according to any one of claims 2 to 6, characterized in that a suction pump (14) for cyclically sucking off moist air is separately connected with individual chambers (6, 7, 8) and that the suction pump (14) as well as stop valves (13) are controlled between the connections of the suction ducts (10, 11, 12) to the chambers (6, 7, 8) and the suction pump (14) as a function of the moisture values measured in the individual chambers (6, 7, 8).

## Revendications

1. Procédé pour le séchage par l'air des fromages (2), dans lequel les fromages (2) sont conduits à travers un tunnel de séchage (4) au moyen d'un transporteur, de l'air est aspiré du tunnel de séchage (4) en maintenant une pression négative et l'air aspiré est séché et retourné au tunnel de séchage (4) en maintenant ladite pression négative.

2. Installation pour la mise en oeuvre du procédé selon la revendication 1, caractérisée par un tunnel de séchage (4) traversé d'un transporteur et comprenant une porte de chargement (3) susceptible d'être fermée d'une manière étanche, porte (3) qui est déplaçable transversalement au transporteur dans un guidage et peut être pressée d'une manière étanche contre l'ouverture de chargement en sens de transport, et au moins un conduit d'aspiration (10, 11, 12) relié au tunnel de séchage (4), un dispositif de séchage (15) de l'air aspiré et au moins un conduit de retour (20, 21, 22) de l'air séché.

3. Installation selon la revendication 2, caractérisée en ce que le transporteur est constitué par un convoyeur ou une voie suspendue, qui est interrompu dans la zone des portes (9) déplaçables transversalement au transporteur et conçu pour être déplaçable ou pivotant en sens de transport.

4. Installation selon la revendication 2 ou 3, caractérisée en ce que le tunnel de séchage (4) a la forme d'un tube.

5. Installation selon la revendication 2, 3 ou 4, caractérisée en ce que le tunnel de séchage (4) en sens de transport est divisé en une pluralité de chambres isolées (6, 7, 8), chambres qui sont séparées l'une de l'autre d'une manière étanche par des cloisons (9) ou portes déplacables transversalement à la direction de transport, et en ce que des conduits séparés d'aspiration (10, 11, 12) et de retour (20, 21, 22) sont raccordés aux chambres (6, 7, 8).

6. Installation selon l'une des revendications 2 à 5, caractérisée en ce que le moyen de séchage (15) du gaz récyclé est réalisé en forme d'un dispositif de condensation de l'humidité et de stérilisation, l'échangeur duquel est disposé dans le conduit de retour (18) pour préchauffer le gaz de récyclage séché et stérilisé.

7. Installation selon l'une des revendications 2 à 6, caractérisée en ce qu'une pompe d'aspiration (14) pour aspirer l'air humide de façon cyclique est reliée séparément à des chambres individuelles (6, 7, 8) et en ce que la pompe d'aspiration (14) ainsi que des vannes d'arrêt (13) sont commandées entre les raccords des conduits d'aspiration (10, 11, 12) aux chambres (6, 7, 8) et à la pompe d'aspiration (14) en fonction des valeurs d'humidités mesurées dans les chambres individuelles (6, 7, 8).
